# DEMANDE DE BREVET EUROPEEN

(11) **EP 1 457 411 A1**
(43) Date de publication de la demande: **15.09.2004**
(21) Numéro de dépôt: 04370006.1
(22) Date de dépôt: 12.03.2004
(51) Int. Cl.: B62H 3/02

(54) **Dispositif pour maintenir à l'arrêt un cycle ou une motocyclette en position globalement et sensiblement verticale sur un plan de pose, par l'intermédiare de sa selle**

(30) Priorité: 14.03.2003 FR 0303188
(71) Demandeur: Verdier, Corinne, Michèle, Paule, 59000 Lille (FR); Lefebvre, Julien, Jean-Claude, 62700 Bruay La Buissiere (FR)
(72) Inventeur: Verdier, Corinne, Michèle, Paule, 59000 Lille (FR); Lefebvre, Julien, Jean-Claude, 62700 Bruay La Buissiere (FR)
(74) Mandataire: Duthoit, Michel

(57) **Abrégé**

Dispositif pour maintenir un cycle ou une motocyclette à l'arrêt en position globalement et sensiblement verticale sur un plan de pose.

Selon la présente invention, le dispositif comporte au moins un corps de type allongé (2) présentant une première extrémité solidarisée de façon articulée à une structure (1) et présentant une deuxième extrémité solidarisée de façon articulée à des moyens (3) de maintien de la selle (4) aptes à être assujettis de façon amovible à la selle (4) dudit cycle ou de ladite motocyclette.

La présente invention concerne également une station pour le rangement de cycles ou de motocyclettes comportant plusieurs dispositifs.

## Description

La présente invention concerne un dispositif pour maintenir à l'arrêt un cycle ou une motocyclette en position globalement et sensiblement verticale sur un plan de pose, par l'intermédiaire de sa selle.

Le maintien du vélo est traditionnellement effectué à l'aide d'un rail ou d'arceaux au sol dans lequel ou lesquels l'utilisateur glisse l'une des roues du cycle. Ce dispositif risque d'endommager le dérailleur ou encore de voiler la roue. Par ailleurs, il ne convient pas à tous les types de vélos. Le vélo de course ayant des roues particulièrement fines n'est pas maintenu de manière stable par ce dispositif. Le vélo risque d'être endommagé en bougeant. Ce dispositif ne convient pas non plus aux vélos de petite taille dont les moyeux, plus bas que sur les autres vélos, se bloquent dans les arceaux de fixation. D'autres dispositifs maintiennent le cycle par le cadre, évitant ainsi de voiler la roue ou d'endommager le dérailleur, mais risque cette fois-ci de rayer le cadre. De plus, ces fixations sont rarement universelles.

Le dispositif selon l'invention permet de remédier à ces inconvénients. Il s'agit en effet selon une première caractéristique d'un dispositif pour maintenir un cycle ou une motocyclette à l'arrêt en position globalement et sensiblement verticale sur un plan de pose notamment le sol, caractérisé en ce qu'il comporte au moins un corps, de type allongé 2 présentant une première extrémité solidarisée de façon articulée à une structure 1, et présentant une deuxième extrémité solidarisée de façon articulée à des moyens 3 de maintien de la selle 4 aptes à être assujettis de façon amovible à la selle 4 dudit cycle ou de ladite motocyclette.

Ainsi, selon l'invention, l'utilisateur, par un léger effort de levage sur le corps allongé 2, place sur son cycle les moyens de maintien aptes à être assujettis de façon amovible à la selle 4. Le mouvement du corps allongé 2 étant globalement et sensiblement dans le même plan que celui des roues du cycle, ce dernier est rigidement maintenu sans risque d'être endommagé. De par le mouvement du corps allongé 2 et la forme des moyens de maintien venant s'assujettir avec la selle 4, le dispositif s'adapte à tous types et à toutes tailles de cycles ou de motocyclettes.

Par position « globalement et sensiblement verticale, on entend une position dont l'angle formé entre le plan défini par le cycle et le plan de pose varie , par exemple, entre 60 et 120 °, c'est-à-dire de part et d'autre de la verticale. Cette même interprétation s'applique mutatis mutandis à l'expression « globalement et sensiblement dans le même plan que celui des roues du cycle » précitée, par rapport au plan de pose.

Selon des modes particuliers de réalisation, le cas échéant pris en combinaison :
- le corps de type allongé 2 est articulé à débattement dans un plan globalement et sensiblement vertical par rapport au plan de pose, notamment le sol, à la structure 1,
- les moyens 3 de maintien de la selle 4 assujettis de façon amovible à la selle 4 sont articulés à débattement dans un plan globalement et sensiblement vertical par rapport au plan de pose au corps de type allongé 2,
- le corps de type allongé 2 est constitué de plusieurs parties, chacune d'entre elles étant reliée aux autres par une liaison 8 qui est soit pivot, soit pivot glissant, soit rotule, soit glissière, soit une combinaison de ces dernières, ce corps 2 pouvant être réalisé au moyen d'un bras flexible mémorisant la forme qu'on lui impose,
- les moyens de maintien 3 sont une coque rigide, pouvant à titre d'exemple être réalisé en résine et fibre de verre, en matière plastique ou en tôle métallique,
- les moyens de maintien 3 sont une coque présentant des protubérances légèrement élastiques s'étendant inférieurement venant coopérer avec une des parties de la selle 4 pour la solidariser par serrage de façon amovible,
- la coque 3 comprend des moyens de fixation complémentaires à attaches de type bande Velcro ® et/ou des moyens de serrage à pince,
- la première extrémité dudit corps 2 de type allongé est mobile par rapport à ladite structure 1 par des moyens de coulissement haut-bas et/ou droite-gauche dans le plan de ladite structure 1 notamment en étant perpendiculaire par rapport au plan de pose, notamment le sol,
- le dispositif est associé fonctionnellement à au moins une rainure de type rail 9 au plan de poste 13 de type rail rapporté ou gorge creusée ou s'insèrent une ou plusieurs roues du cycle ou de la motocyclette, ladite rainure de type rail 9 pouvant être équipée de moyens d'entraînement 10 des roues de cycle ou de la motocyclette permettant aux roues de tourner tout en laissant le cycle ou la motocyclette immobile.

Dans le même concept inventif, l'invention concerne une station pour le rangement de cycles ou de motocyclettes comportant plusieurs dispositifs selon l'invention où tout ou partie desdits dispositifs sont disposés dans au moins une configuration sensiblement circulaire et/ou en étoile définissant au moins un espace intérieur fonctionnel notamment pour l'implantation de moyens de lavage-séchage et/ou de maintenance desdits cycles et/ou desdites motocyclettes.

Les dessins annexés illustrent l'invention :
- les figures 1 et 2 représentent un vélo maintenu par le dispositif selon l'invention,
- la figure 3 représente le cas où le corps intermédiaire 2 est constitué de plusieurs parties, reliées entre elles par des liaisons 8 avec des moyens de pivotement que sont, soit rotule, soit pivot, soit pivot glissant, soit glissière, soit une combinaison de ces dernières,
- les figures 4 et 5 décrivent des mouvements de translation du dispositif par rapport au bâti 1,
- la figure 6 représente un dispositif tel que décrit précédemment, associé au plan de pose 13, notamment le sol, à un rail 9 de guidage des roues du cycle ou de la motocyclette.

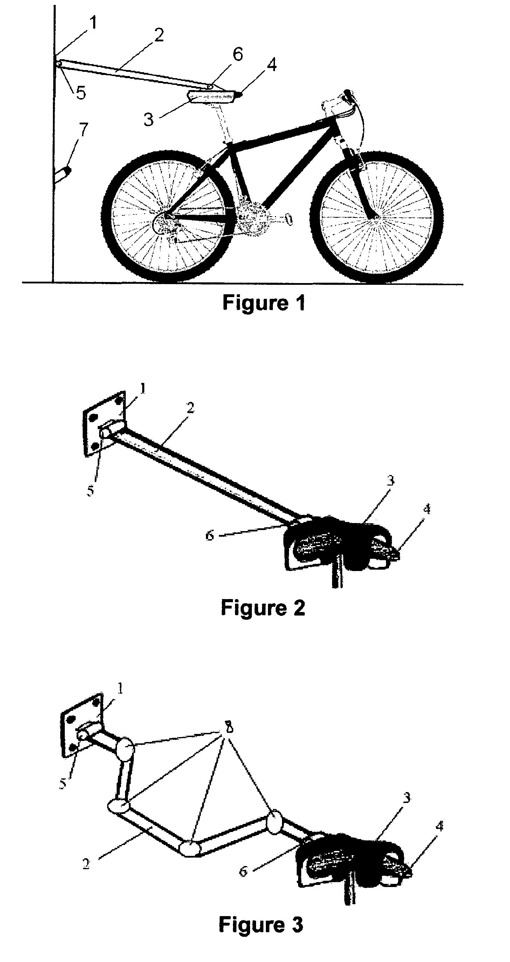

En référence aux figures 1 et 2, le dispositif comporte un corps de type allongé 2, ici un levier rigide constitué d'un seul élément, dont une première extrémité est liée par une articulation 5 à une structure 1 et la seconde extrémité est liée par une articulation 6 à des moyens de maintien 3 se solidarisant de façon amovible à la selle 4 dudit cycle ou de ladite motocyclette. Ainsi, le vélo est bloqué en translation dans la direction définie par les deux roues, et dans la direction orthogonale à la précédente, dans un plan globalement et sensiblement horizontal. Ces moyens de maintien 3 sont ici une coque dont la forme progressive permet de se solidariser de façon amovible à tous types de selles.

La longueur du levier et la position des articulations 5 et 6 sont telles que l'utilisateur peut maintenir des cycles de toutes tailles et de tous types (vélos de ville, vélos tout-terrain, vélos tout-chemin, etc).

En position non-utilisé, le dispositif selon l'invention vient par l'intermédiaire du levier 2 reposer contre une butée 7, son axe longitudinal étant globalement et sensiblement perpendiculaire au plan de pose

Dans la forme de réalisation selon la figure 3, le corps de type allongé 2 est constitué de plusieurs parties, reliées entre elles par des liaisons 8 avec des moyens de pivotement qui sont soit rotule, soit pivot, soit pivot glissant, soit glissière, soit une combinaison d'entre eux.

Ainsi, dans ce cas, l'utilisateur du dispositif peut maintenir un cycle sans avoir besoin d'aligner les roues dudit cycle dans le plan de débattement du levier 2. Le cycle ou la motocyclette peut être aussi maintenu globalement et sensiblement vertical les deux roues sur le plan de pose 13, notamment le sol, dans toute position angulaire par rapport au bâti 1, selon un plan sensiblement vertical par rapport au plan de pose 13.

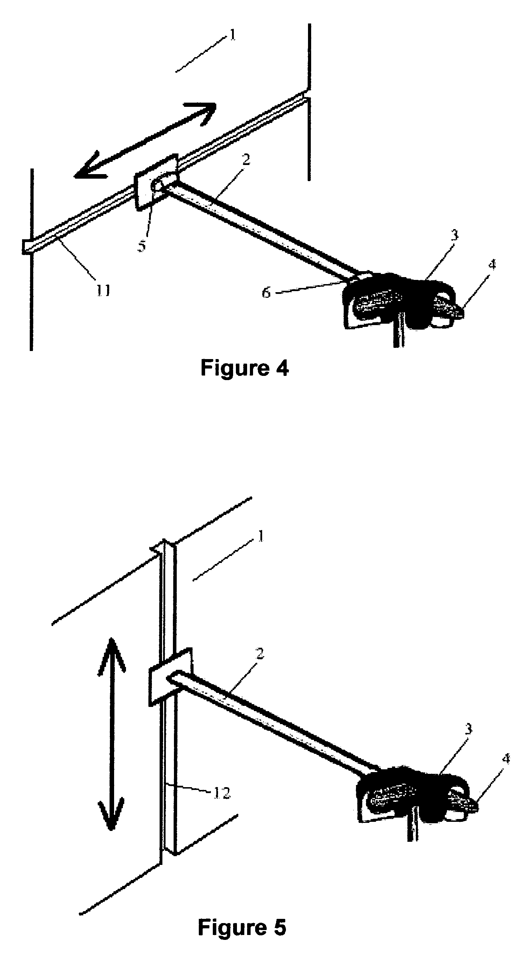

Dans la forme de réalisation selon la figure 4, le dispositif selon l'invention peut translater horizontalement par rapport au bâti 1 grâce à une glissière 11. Ceci permet à l'utilisateur de positionner le dispositif par rapport au cycle à maintenir et non l'inverse, ce qui facilite la manoeuvre.

Selon une variante illustrée par la figure 5, le corps de type allongé 2 est en liaison glissière selon un axe vertical avec le bâti 1. La coque 3 se solidarisant de façon amovible avec la selle 4 est liée fixement avec le levier 2. Ainsi, cette structure joue le rôle desdites articulations des première et seconde extrémités dudit corps de type allongé 2 décrites précédemment.

Pour maintenir le cycle, l'utilisateur fait coulisser le levier 2 dans la glissière 12 et pose la coque 3 sur la selle 4. Dans cette configuration, l'utilisateur ne fait pas pivoter le dispositif mais le translate de bas en haut.

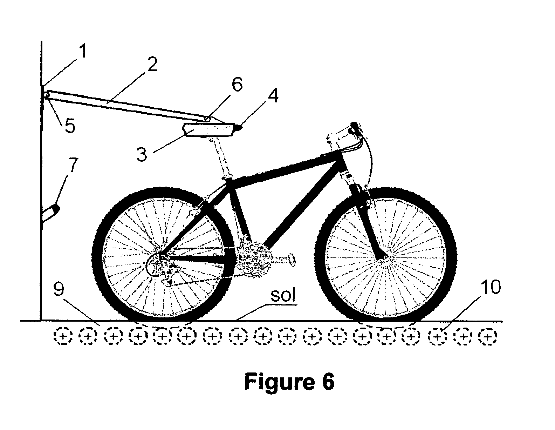

Dans la forme de réalisation selon la figure 6, le dispositif est associé à au moins une rainure 9 prévue au niveau du plan de pose 13, notamment le sol, de type rail rapporté ou gorge creusée, pouvant être équipée de moyens d'entraînement 10 des roues du cycle ou de la motocyclette pour permettre à l'utilisateur de faire tourner les roues tout en laissant le cycle ou la motocyclette immobile.

Dans les différentes variantes illustrées, le corps de type allongé 2, dans la position de maintien du cycle, a son axe longitudinal sensiblement et globalement parallèle audit plan de pose. En outre, à l'exception de la variante illustrée à la figure 3, il est également sensiblement et globalement dans le même plan que celui de roues du cycle.

Le dispositif selon l'invention est particulièrement destiné au maintien à l'arrêt d'un cycle ou d'une motocyclette en position sensiblement et globalement verticale, les roues sur le plan de pose 13 notamment pour faciliter son lavage ou le parcage.

## Revendications

1. Dispositif pour maintenir un cycle ou une motocyclette à l'arrêt en position globalement et sensiblement verticale sur un plan de pose (13), **caractérisé en ce qu'**il comporte au moins un corps de type allongé (2) présentant une première extrémité solidarisée de façon articulée à une structure (1), et présentant une deuxième extrémité solidarisée de façon articulée à des moyens (3) de maintien de la selle (4) aptes à être assujettis de façon amovible à la selle dudit cycle ou de ladite motocyclette.

2. Dispositif selon la revendication 1, **caractérisé en ce que** le corps de type allongé (2) est articulé à débattement dans un plan vertical par rapport au plan de pose (13) à la structure (1).

3. Dispositif selon la revendication 1, **caractérisé en ce que** les moyens (3) de maintien de la selle (4) assujettis de façon amovible à la selle (4) sont articulés à débattement dans un plan vertical par rapport au plan de pose (13) au corps de type allongé (2).

4. Dispositif selon l'une quelconque des revendications précédentes, **caractérisé en ce que** le corps de type allongé (2) est constitué de plusieurs parties, chacune d'entre elles étant reliée aux autres par une liaison qui est soit pivot, soit pivot glissant, soit rotule, soit glissière, soit une combinaison de ces dernières, ce corps (2) pouvant être réalisé au moyen d'un bras flexible mémorisant la forme qu'on lui impose.

5. Dispositif selon l'une quelconque des revendications précédentes, **caractérisé en ce que** les moyens de maintien (3) sont une coque rigide, pouvant à titre d'exemple être réalisée en résine et fibre de verre, en matière plastique ou en tôle métallique.

6. Dispositif selon l'une quelconque des revendications précédentes, **caractérisé en ce que** les moyens de maintien (3) sont une coque présentant des protubérances légèrement élastiques s'étendant inférieurement venant coopérer avec une des parties de la selle (4) pour la solidariser par serrage de façon amovible.

7. Dispositif selon la revendication 6, **caractérisé en ce que** la coque comprend des moyens de fixation complémentaires à attache de bande type Velcro ® et/ou des moyens de serrage à pince.

8. Dispositif selon l'une quelconque des revendications précédentes, **caractérisé en ce que** la première extrémité du corps (2) de type allongé est mobile par rapport à ladite structure (1) par des moyens de coulissement haut-bas et/ou droite-gauche dans le plan de ladite structure notamment en étant perpendiculaire par rapport au plan de pose (13).

9. Dispositif selon l'une quelconque des revendications précédentes, **caractérisé en ce qu'**il est associé à au moins une rainure prévue au niveau du plan de pose (13), de type rail (9) rapporté ou gorge creusée où s'insèrent une ou plusieurs roues du cycle ou de la motocyclette, ladite au moins rainure de type rail (9) pouvant être équipée de moyens d'entraînement (10) des roues de cycle ou de la motocyclette permettant aux roues de tourner tout en laissant le cycle ou la motocyclette immobile.

10. Station pour le rangement de cycles ou de motocyclettes comportant plusieurs dispositifs selon l'une quelconque des revendications précédentes, **caractérisée en ce que** tout ou partie desdits dispositifs sont disposés dans au moins une configuration sensiblement circulaire et/ou en étoile définissant au moins un espace intérieur fonctionnel notamment pour l'implantation de moyens de lavage-séchage et/ou de maintenance desdits cycles et/ou desdites motocyclettes.
